# FASCICULE DE BREVET EUROPEEN

(11) **EP 0 671 357 B1**
(45) Date de publication et mention de la délivrance du brevet: **14.05.1997**
(21) Numéro de dépôt: 95400165.7
(22) Date de dépôt: 26.01.1995
(51) Int. Cl.: C01B 3/00

(54) **Alliages nanocristallins à base de nickel et usage de ceux-ci pour le transport et le stockage de l'hydrogène**
Nanokristalline Legierungen auf Nickel-Basis und ihre Verwendung beim Transport und Lagerung von Wasserstoff
Nanocrystalline alloys based on nickel and their use for transport and storage of hydrogen

(30) Priorité: 07.03.1994 CA 2117158
(43) Date de publication de la demande: 13.09.1995
(73) Titulaire: HYDRO-QUEBEC, Montréal Québec H2Z 1A4 (CA); UNIVERSITE Mc GILL, Montréal, Québéc H3A 2T5 (CA)
(72) Inventeur: Schulz, Robert, Sainte-Julie, Québec J0L 2S0 (CA); Strom-Olsen, John, Westmount, Québec H3Y 2V4 (CA); Zaluski, Leszek, Montréal, Québec H4E 3E1 (CA)
(74) Mandataire: CABINET BONNET-THIRION

(56) Documents cités:
- WO-A-94/12695
- FR-A- 2 386 428
- METALLURGICAL TRANSACTIONS A, vol.21A, Septembre 1990, ASM, MATERIALS PARK, OHIO pages 2333 - 2337 FECHT ET AL. 'Nanocrystalline Metals Prepared by High-Energy Ball Milling'
- ADVANCED MATERIALS, vol.5, no.7/8, Juillet 1993, WEINHEIM, DE pages 554 - 555 JINPING LI ET AL. 'A New Method for the Production of Mg-Ni Hydrogen Storage Materials'

## Description

### ARRIÈRE PLAN TECHNIQUE DE L'INVENTION

### a) Domaine technique de l'invention

La présente invention a pour objet de nouveaux alliages à base de nickel ci-après appelés "alliages nanocristallins", lesquels se distinguent des alliages de même composition actuellement connus en ce qu'ils présentent sous la forme d'une poudre de cristallites de taille inférieure à 100 nm et dont la structure cristalline permet l'absorption d'hydrogène.

L'invention a également pour objet un procédé de préparation de ces nouveaux alliages nanocristallins et leur usage pour le stockage et/ou le transport de l'hydrogène.

### b) Brève description de l'art antérieur

Il est connu que de nombreux alliages métalliques sont capables d'absorber l'hydrogène de façon réversible. À titre d'alliages capables ainsi de former des hydrures, on peut notamment citer les alliages suivants: FeTi, LaNi₅ et Mg₂Ni.

De par leur capacité d'absorption de l'hydrogène, ces alliages sont avantageusement utilisables sous forme de poudre pour le stockage de l'hydrogène. Ils offrent en effet les avantages suivants:
(1) une très grande capacité de stockage de l'hydrogène, qui est même supérieure à celle de l'hydrogène liquide, puisque la densité volumique d'hydrogène dans ces alliages est supérieure à celle de l'hydrogène liquide à cause des liaisons hydrogène-métal qui font que la distance entre les atomes d'hydrogène dans l'alliage est inférieure à celle existant entre les atomes d'hydrogène liquide;
(2) une réversibilité totale du mécanisme de formation de l'hydrure;
(3) une libération endothermique de l'hydrogène hors de l'alliage, ceci réduisant au maximum les problèmes de sécurité; et
(4) la non-nécessité d'une technologie de pointe pour obtenir le transfert d'hydrogène dans ou hors de l'alliage.

Malgré ces avantages, les alliages traditionnels connus comme étant capables d'absorber l'hydrogène de façon réversible, n'ont jamais été utilisés à l'échelle industrielle, à cause des principales difficultés suivantes. énumérées.
(1) Tout d'abord, certains alliages comme Mg₂Ni, ne sont pas faciles à préparer dans la mesure où le diagramme de phase des métaux qui les constituent ne permet pas de les obtenir directement, par simple refroidissement d'un mélange fondu des métaux les constituant, en proportions voulues.
(2) D'autre part, les alliages en question ne sont efficaces pour le stockage d'hydrogène que s'ils se présentent sous une forme cristalline. Il convient donc de les convertir sous cette forme s'ils sont amorphes, puis de les activer. Ceci exige des recuits sous vide ou sous forte pression d'hydrogène, effectués à plusieurs reprises jusqu'à ce que les caractéristiques d'absorption et de désorption voulues soient atteintes.
(3) En outre, sous l'effet du cycle absorption-désorption de l'hydrogène, les alliages cristallins conventionnels se fragmentent en petits morceaux et perdent leur intégrité structurale. Une détérioration de la cinétique d'absorption d'hydrogène et des problèmes de transfert de chaleur s'en suivent.
(4) Enfin, à cause des oxydes en surface, les alliages conventionnels même sous forme cristalline, ont besoin d'être activés avant de pouvoir absorber de l'hydrogène. Le traitement d'activation consiste à chauffer plusieurs fois à haute température l'alliage sous forte pression d'hydrogène. Ce traitement doit être répété chaque fois que le matériau est exposé à l'air.

Dans le cadre d'études effectuées au cours des deux dernières années sur l'alliage de FeTi et sur sa capacité d'absorber de façon réversible l'hydrogène, les présents inventeurs ont découvert qu'en broyant intensément pendant plusieurs heures sous atmosphère inerte une poudre de FeTi ou un mélange de poudres de Fe et de Ti utilisées en proportions adéquates, il est possible d'obtenir directement une poudre cristalline de FeTi dont la taille des cristaux est, inférieure à 100 nm. Les présents inventeurs ont également découvert que cette poudre nanocristalline de FeTi est utilisable comme milieu absorbant pour le stockage de l'hydrogène sans nécessiter un traitement d'activation, contrairement aux poudres polycristallines de FeTi.

Poursuivant leurs recherches, les présents inventeurs ont maintenant découvert de façon tout à fait surprenante, qu'il est également possible d'obtenir directement sous forme nanocristalline, divers alliages à base de nickel, dont notamment les alliages Mg₂Ni et LaNi₅ connus pour absorber l'hydrogène, si l'on procède à un broyage intense d'une poudre de l'alliage en question ou d'un mélange approprié de poudres des métaux formant l'alliage pendant plusieurs heures.

Ceci est *a priori* surprenant dans la mesure où, d'une part, la synthèse de n'importe quel alliage ou composé intermétallique par broyage n'est pas toujours possible et où, d'autre part, une telle synthèse lorsqu'elle est possible, conduit souvent à un alliage se présentant sous une forme amorphe plutôt que cristalline.

Il a également été découvert que si le broyage est effectué de façon suffisante pour réduire la taille des cristallites à quelques nanomètres, la poudre nanocristalline de Mg₂Ni, de LaNi₅ ou de tout autre alliage obtenu à base de nickel ayant une structure cristalline capable d'absorber l'hydrogène, peut ensuite servir telle quelle comme milieu absorbant pour emmagasiner de l'hydrogène sous forme d'hydrure, sans nécessiter un traitement d'activation.

### OBJETS ET RÉSUMÉ DE L'INVENTION

La présente invention a donc pour premier objet une poudre d'un alliage de Ni avec un autre métal choisi dans le groupe constitué par Mg, La, Be et Li, caractérisée en ce qu'elle se présente sous la forme d'agglomérats de cristallites de taille inférieure à 100 nm et dont la structure cristalline permet une absorption d'hydrogène.

La poudre en question peut être constituée de cristallites de LaNi₅ de granulométrie inférieure à 100 nm, ou de cristallites d'alliages à base de Ni et de Be ou de Li ayant une taille inférieure à 100 nm et une structure cristalline leur permettant d'absorber l'hydrogène.

Selon un mode particulièrement préféré de réalisation de l'invention, lequel constitue en lui-même un autre objet de ladite invention, la poudre en question est constituée de cristallites de formule Mg₂₋ₓNi₁₊ₓ (x étant compris entre -0,3 et 0,3), lesdits cristallites ayant une taille inférieure à 100 nm et de préférence inférieure à 30 nm.

L'invention a en outre pour objet l'usage de la poudre nanocristalline dont la structure est ci-dessus définie, pour le stockage et/ou le transport de l'hydrogène. Il a en effet été découvert que ces poudres nanocristallines à base de nickel, tout comme celle à base de fer et titane, ne requièrent aucun, sinon un simple traitement d'activation à basse température. Il a également été découvert que la cinétique d'absorption et de diffusion de l'hydrogène est beaucoup plus rapide. Ceci peut notamment s'expliquer par le fait que la poudre nanocristalline possède une très grande quantité de joints de grain.

L'invention a enfin pour objet un procédé pour préparer la poudre nanocristalline ci-dessus mentionnée, lequel consiste à soit broyer intensément une poudre de l'alliage choisi jusqu'à ce que la taille des cristaux de celle-ci atteigne la valeur voulue, soit broyer intensément un mélange de poudres choisies en proportions adéquates pour obtenir l'alliage désiré, ce broyage permettant à la fois la préparation par voie mécanique de cristallites de l'alliage désiré à partir des poudres de Ni et de l'autre métal, et la réduction de la taille de ces cristallites à la valeur voulue. Ce procédé a le grand avantage d'être très simple et de pouvoir être mis en oeuvre à température ambiante et sous simple pression atmosphérique. Il est toutefois nécessaire que le broyage soit fait sous atmosphère inerte pour éviter une oxydation de l'alliage formé.

Selon un mode préféré de réalisation, on peut ajouter au début du broyage au moins un autre métal dont la présence n'affecte pas la structure cristalline de l'alliage intermétallique obtenu, cet autre métal pouvant être du fer, de l'aluminium, du cobalt, du zinc, du lanthane, du palladium ou de préférence du cuivre.

Selon un autre mode préféré de l'invention, une fois le broyage effectué et les cristallites obtenues, on peut ajouter à ceux-ci une poudre d'un matériau connu pour catalyser la dissociation de la molécule d'hydrogène, puis alors procéder à un broyage additionnel plus court de façon à appliquer des petites particules de ce matériau catalyseur sur au moins une partie de la surface des cristallites. Le matériau en question peut être du palladium, du platine, de l'irridium ou rhodium. C'est de préférence du palladium.

L'invention et ses divers avantages seront mieux compris à la lecture de la description plus détaillée mais non limitative qui va suivre, faite en se référant aux dessins annexés.

### BRÈVE PRÉSENTATION DES DESSINS

La figure 1 est un graphique donnant la valeur des taux d'absorption d'hydrogène (exprimés en nombre x d'atomes d'hydrogène absorbés Mg₂NiHₓ en fonction du temps) à 573°K sous une pression de 7 bars lors de la seconde d'hydrogénation d'un alliage nanocristallin de Mg₂Ni (■) et lors d'une hydrogénation d'un alliage polycristallin de Mg₂Ni après un cycle de 10 activations (●).

La figure 2 est un graphique analogue à celui de la figure 1, donnant la valeur des taux d'absorption d'hydrogène mesurés à 473°K sous une pression de 15 bars, pour un alliage nanocristallin de Mg₂Ni (o) et un alliage polycristallin de Mg₂Ni (●).

La figure 3 est une représentation des spectres de diffraction aux rayons X d'un mélange de Mg-Ni (a) à l'état initial (mélange de poudres pures de Mg et de Ni avant broyage), (b) après 26 h de broyage et (c) après 66 h de broyage.

La figure 4 est un graphique donnant la valeur des taux d'absorption d'hydrogène mesuré à 473° K sous une pression de 15 bars, pour un alliage nanocristallin de Mg₂Ni (o) et pour ce même alliage après le broyage additionnel de l'alliage avec du Pd (▲, ■).

La figure 5 est une représentation des courbes isothermes de "pression-concentration" d'hydrogène mesurés à 573° K durant l'absorption (a) d'un alliage nanocristallin de Mg₂Ni et (b) d'un composé intermétallique nanocristallin de Mg₂Ni_{0.75} Cu_{0.25}.

### DESCRIPTION DÉTAILLÉE DE L'INVENTION

Tel que précédemment indiqué, l'invention a pour objet des poudres d'alliage de Ni avec un autre métal choisi parmi Mg. La, Be et Li, lesquelles se présentent sous forme de cristallites dont la taille est inférieure à 100 nm et dont la structure cristalline permet une absorption d'hydrogène.

Selon l'invention, il est essentiel que la poudre en question se présente sous une forme cristalline. Il est en effet connu et a été confirmé par les essais effectués par les inventeurs, que ces mêmes alliages sous forme amorphe ne sont efficaces pour le stockage d'hydrogène.

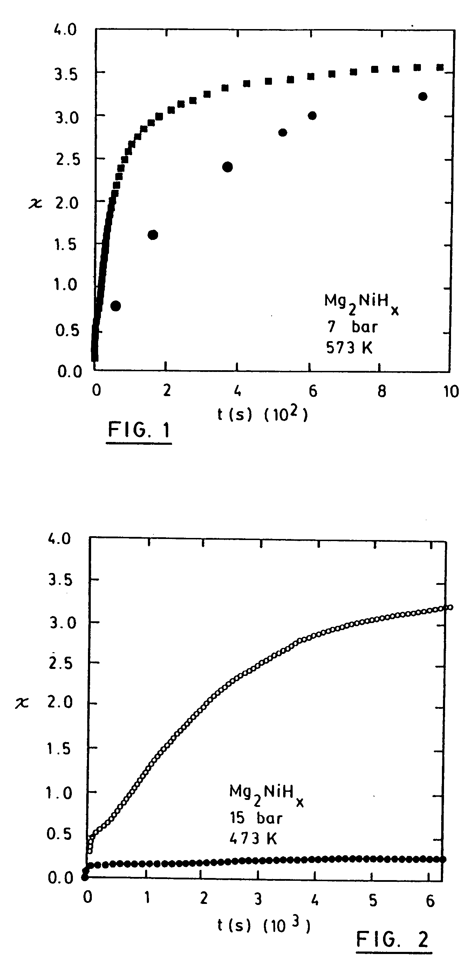

Selon l'invention, il est également essentiel que la poudre d'alliage ait une taille de cristallite inférieure à 100 nm, cette taille dans le cas de l'alliage Mg₂₋ₓ Ni₁₊ₓ étant de préférence inférieure à 30 nm. À l'appui de cette affirmation, on peut se référer à la figure 1. Celle-ci montre qu'un alliage nanocristallin de formule Mg₂Ni selon l'invention dont les cristallites ont une taille comprise entre 20 et 30 nm absorbe beaucoup plus rapidement l'hydrogène qu'un alliage similaire mais polycristallin, et ce malgré que cet alliage polycristallin ait été longuement activé. On peut aussi se référer à la figure 2 qui montre qu'un alliage polycristallin de Mg₂Ni non activé n'absorbe pratiquement pas d'hydrogène, à comparer à l'alliage nanocristallin de Mg₂Ni selon l'invention.

Ces deux figures montrent donc que les alliages selon l'invention sont non seulement plus efficaces pour absorber l'hydrogène que les alliages polycristallins similaires, mais qu'en outre ils ne nécessitent aucune des activations normalement requises pour éliminer la couche externe d'oxydes qui réduit la cinétique d'absorption de l'alliage.

On peut tentativement expliquer cette efficacité à la finesse de la structure cristalline et à la non-homogénéïté chimique de la surface des cristallites. De par leur taille inférieure à 100 nm, ces cristallites présente en surface des petits amalgames de Ni pur avec d'autres petits amalgames d'oxydes tels que MgO dans le cas de l'alliage de Mg₂Ni. Ces petits amalgames de Ni pur facilitent la dissociation de l'hydrogène adsorbé en surface du cristallite et de là, l'absorption des atomes d'hydrogène dans la structure cristalline de l'alliage. On peut également expliquer cette efficacité à la présence d'un grand nombre de joints de grains et de défauts de surface qui permettent à l'hydrogène de pénétrer dans la structure malgré la couche passivante.

Selon l'invention, il est enfin essentiel que la poudre d'alliage ait une structure cristalline permettant une absorption de l'hydrogène, cette propriété étant la principale utilité recherchée dans le cadre de la présente invention.

Un alliage qui répond à cette exigence est celui de formule Mg₂₋₁Ni₁₋ₓ (x étant compris entre -0,3 et 0,3 et étant de préférence égal à 0), qui se présente sous une forme cristalline hexagonale complexe (18 atomes par cellule unitaire). Un autre alliage qui répond à cette exigence est celui de formule LaNi₅.

Le tableau suivant montre la capacité d'absorption et, de là, la capacité de stockage de l'hydrogène de divers alliages.

| **mode de stockage** | **densité du matériau (g/l)** | **densité volumique (nombre atomes d'hydrogène par ml x 10**^{**-22**}**)** | **densité massique (% poids H**_{**2**}**)** |
|---|---|---|---|
| **H**_{**2**} **gazeux à 200 atm** | **1.64 *10**^{**-4**} | **0.98** | **100** |
| **H**_{**2**} **liquide** | **0.071** | **4.2** | **100** |
| **FeTiH**_{**1.93**} | **5.47** | **6.0** | **1.8** |
| **LaNi**_{**5**}**H**_{**6.7**} | **8.25** | **7.58** | **1.5** |
| **Mg**_{**2**}**NiH**_{**4**} | **2.6** | **5.9** | **3.8** |
| **carbone** | **0.32** | **0.7** | **4** |

Dans le tableau ci-dessus, il convient de préciser que les hydrures lorsqu'ils se présentent sous forme de poudre sont susceptibles de contenir un certain pourcentage de vide pouvant atteindre 50%. Dans un tel cas, la densité volumique serait réduite d'autant. Il convient aussi de préciser que la densité massique ne tient pas compte du contenant. Si on en tenait compte, la capacité par unité de masse du Mg₂Ni H₄ serait comparable à celui de l'hydrogène liquide.

Comme on peut le constater au vu de ce tableau, la capacité d'absorption et donc de stockage d'hydrogène de l'alliage Mg₂Ni est sensiblement égale à celle de l'alliage FeTi, et est très supérieure à celle de l'hydrogène gazeux ou liquide (voir la valeur des densités volumiques). En pratique, ceci signifie qu'on peut stocker beaucoup plus d'hydrogène en l'absorbant dans un volume donné d'alliage qu'en le stockant sous forme gazeuse ou liquide.

Comme on peut également le constater, l'alliage Mg₂Ni est plus intéressant d'un point de vue pratique que l'alliage FeTi dans la mesure où sa densité et donc son poids par unité de volume sont très inférieurs.

L'alliage LaNi₅ est également intéressant, dans la mesure où sa capacité de stockage de l'hydrogène est très supérieure à celle des alliages FeTi ou Mg₂Ni. Toutefois, la densité volumique de cet alliage est très élevée, ce qui le rend moins pratique en usage.

Dans le cadre de la présente invention, d'autres alliages de nickel capables d'absorber l'hydrogène sont possibles, dans lesquels l'autre élément métallique de l'alliage est un métal très léger, comme le lithium ou le béryllium. L'utilisation de tels éléments beaucoup plus légers a le grand avantage de réduire en autant la densité volumique de l'alliage et de rendre plus intéressant d'un point de vue pratique.

L'invention couvre donc également les alliages nanocristallins de nickel avec le lithium ou le béryllium, qui sont capables d'absorber l'hydrogène.

Les alliages nanocristallins selon l'invention peuvent être préparés directement à partir des alliages polycristallins correspondants. Il suffit alors de leur faire subir un broyage intense pour réduire la taille des cristallites à la valeur voulue.

Selon un mode tout particulièrement préféré de l'invention, les alliages nanocristallins selon l'invention peuvent être également préparés directement à partir de poudres des éléments métalliques qui les composent. Cette préparation directe peut s'effectuer de façon très simple, par simple broyage effectué à température et pression ambiantes sous atmosphère inerte, d'un mélange de poudre de Ni avec de la poudre de l'autre métal de l'alliage en proportions adéquatement choisies. Ceci permet d'obtenir l'alliage voulu. Pour être efficace, ce broyage se doit d'être intense. Il permet alors non seulement la préparation par voie mécanique de cristallites de l'alliage à partir des poudres de Ni et de l'autre métal, mais également la réduction de la taille de ces cristallites à la valeur voulue.

D'un point de vue pratique, ce broyage intense peut être effectué dans un broyeur à billes avec ou sans mouvement planétaire du plateau. A titre d'exemples de tels broyeurs, on peut nommer ceux commercialisés sous les marques de commerce SPEX 8000 ou FRITCH.

Selon l'invention, il a été découvert qu'un tel broyage intense de poudres de métal effectué sous atmosphère inerte (argon par exemple) "force" une réaction entre les métaux en même temps que les poudres sont broyées, et conduit à la formation de cristallites de l'alliage désiré. Ceci, d'un point de vue pratique, est extrêmement intéressant puisque cela permet la synthèse directe d'alliages, comme par exemple Mg₂Ni, que l'on ne peut que très difficilement obtenir par simple fusion et refroidissement.

Le fait qu'un intermétallique comme Mg₂Ni, soit directement synthétisable sous forme cristalline de cette façon n'était pas du tout évident avant que la présente invention ne soit réalisée. On comprendra en effet que, dans de nombreux cas, un tel broyage conduit soit à un mélange de plusieurs composés, soit à un alliage amorphe et qu'en outre, rien ne laissait suspecter d'un alliage comme Mg₂Ni ayant une structure cristalline hexagonale complexe (18 atomes par cellule) pouvait être ainsi synthétisée, comme ce fut le cas pour l'alliage FeTi qui a une structure cristalline cubique centrée beaucoup plus simple.

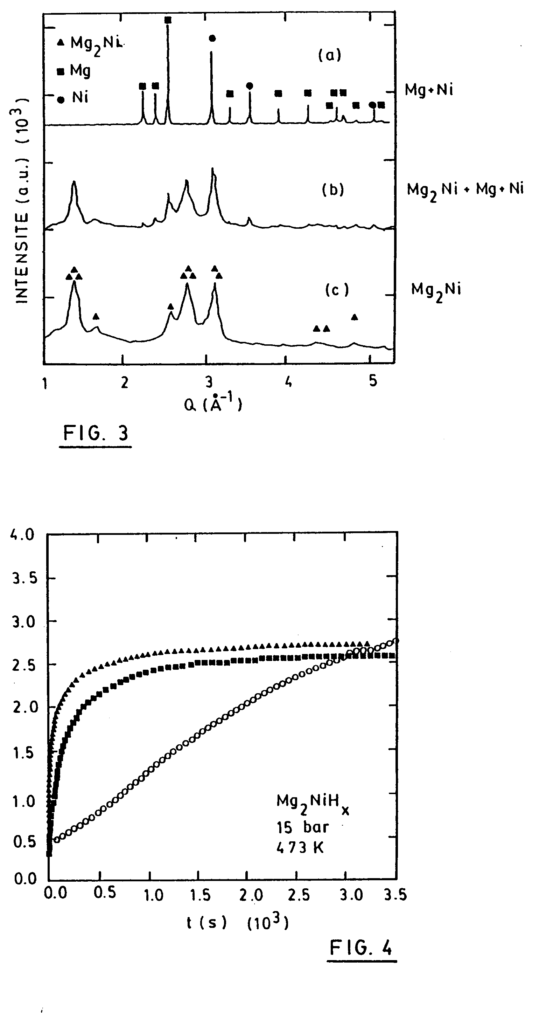

En pratique, le broyage peut prendre plusieurs heures. La figure 3 montre à l'aide de spectre de diffraction aux rayons X, le mécanisme de synthèse. Au début du broyage [voir spectre (a)], chaque métal montre ses propres pics de diffraction (■ pour Mg et ● pour Ni). Après 26 heures de broyage [voir spectre (b)], les pics des métaux purs sont pratiquement éliminés et ceux de l'alliage apparaissent. Après 66 heures de broyage [voir spectre (c)], seuls les pics de l'alliage Mg₂Ni sont visibles (▲). Il y a donc bel et bien synthèse de l'alliage par simple broyage mécanique. Dans ce cas, les cristallites obtenues avaient une taille de 20 à 30 nm.

Ce procédé de synthèse directe par simple broyage a de nombreux avantages:
1- il est simple, peu coûteux et versatile;
2- il peut s'appliquer à grande échelle;
3- il permet de synthétiser des alliages qui sont difficiles à fabriquer par métallurgie conventionnelle (comme Mg₂Ni);
4- les caractéristiques de l'alliage comme matériaux absorbant d'hydrogène (température et pression d'absorption d'hydrogène) peuvent être modifiées facilement en changeant la composition du mélange à broyer; et
5- un revêtement protecteur et perméable à l'hydrogène (exemple Pd) peut être aisément appliqué aux poudres par un broyage subséquent.

Selon l'invention, ce procédé de synthèse peut s'appliquer à tous les matériaux conventionnels de stockage de l'hydrogène (FeTi, Mg₂Ni, LaNi₅...) pour améliorer leurs propriétés. Ce procédé peut également être utilisé pour synthétiser de nouveaux alliages plus légers (exemple à base de Be et Li).

Tel que précédemment indiqué, les alliages nanocristallins selon l'invention sont essentiellement destinés à être utilisés avantageusement pour stocker et transporter de l'hydrogène pour une utilisation éventuelle comme combustible.

Il est connu que ces besoins pour le stockage et le transport de l'hydrogène vont aller en grandissant avec l'utilisation accrue de ce dernier comme combustible. Par exemple, au dernier salon de l'automobile, la société MAZDA a présenté une voiture à l'hydrogène. Il y a donc un besoin pressant dans ce domaine, et ce non seulement dans l'automobile mais pour de nombreuses autres applications.

Les seuls modes de stockage et de transport de l'hydrogène qui sont actuellement utilisés à grande échelle sont:
- sous forme gazeuse dans des cylindres sous pression, ou
- sous forme liquide dans des contenants cryogéniques.

Le transport sous forme liquide a l'inconvénient de présenter un coût élevé de réfrigération et des dangers en cas de panne du système de refroidissement. Le transport sous forme gazeuse a l'inconvénient d'offrir une faible densité volumique, c'est-à-dire d'hydrogène par unité de volume.

Il a déjà été suggéré de stocker et transporter l'hydrogène sous forme "solide", à savoir sous forme d'hydrures d'alliages cristallins capables de l'absorber, tels que des alliages FeTi, Mg₂Ni ou LaNi₅.

Le stockage et le transport sous forme d'hydrures a l'avantage de ne pas nécessiter de système de refroidissement et on peut emmagasiner environ six fois plus d'hydrogène par unité de volume que par voie gazeuse.

En effet, ce mode de stockage a l'avantage de posséder une densité volumique d'hydrogène (nombre d'atomes d'hydrogène par unité de volume) supérieure à celle du liquide sans nécessité de coûteux systèmes de refroidissement (voir le tableau comparatif des divers modes de stockage de l'hydrogène donné ci-dessus). Avec ces alliages, les principaux problèmes à résoudre qui ont d'ailleurs freiné leur usage jusqu'à présent, étaient:
- le problème de poids (les alliages de FeTi ou LaNi₅ étant très lourds); et
- surtout, la nécessité d'avoir à réactiver régulièrement les particules d'alliages pour les rendre absorbantes.

Selon la présente invention, il a été découvert que si l'on utilise une poudre nanocristalline d'un alliage capable d'absorber l'hydrogène, telle que Mg₂Ni (qui a en outre l'avantage d'être très léger par rapport à FeTi), il n'est pas nécessaire de procéder à une activation de la poudre pour la rendre absorbante. Au pire, un simple traitement d'activation à basse température s'avérera suffisant. De plus, il a été découvert que la cinétique d'absorption (diffusion de l'hydrogène) est beaucoup plus rapide étant donné que l'alliage nanocristallin possède une très grande quantité de joints de grain. Il a enfin été découvert que les alliages nanocristallins maintiennent leur intégrité structurale aux cycles d'absorption-désorption de l'hydrogène car la taille des cristaux est déjà inférieure à leur taille après décrépitation due à l'hydrogène.

Tout ceci rend donc les alliages nanocristallins selon l'invention tout particulièrement utiles et efficaces pour stocker et/ou transporter l'hydrogène. Ces alliages ont en effet les avantages suivants par rapport aux alliages polycristallins correspondants:
- absorber l'hydrogène à des températures inférieures à 200°C sans aucune activation (à titre d'exemple, les alliages Mg₂Ni cristallins connus ne "réagissent" avec l'hydrogène qu'à des températures supérieures à 250°C, et uniquement après plusieurs cycles d'activation);
- activation plus facile avant l'hydrogénation à hautes températures (supérieures à 300°C);
- cinétique d'absorption d'hydrogène beaucoup plus rapide à comparer aux alliages polycristallins correspondants;
- moins de décrépitation (meilleure intégrité structurale).

De façon à améliorer encore la qualité et l'efficacité des alliages nanocristallins selon l'invention, un matériau catalysant la dissociation de la molécule d'hydrogène comme par exemple du palladium, peut être appliqué sur la surface des cristallites. Ce matériau peut être appliqué de façon extrêmement simple, en procédant à un broyage subséquent et beaucoup plus court des cristallites avec de la poudre du matériau ou métal choisi comme revêtement. Ainsi, on peut broyer les particules d'alliages nanocristallins obtenues avec de la poudre de Pd pendant une certaine période. Ce broyage amène des "noyaux" de palladium à se déposer à même la surface des cristallites. Il est toutefois nécessaire que ce broyage supplémentaire ne soit pas trop long, car on risquerait alors de générer un nouvel alliage intermétallique.

Les avantages que présente un tel dépôt à même la surface des cristallites des alliages nanocristallins selon l'invention sont illustrés sur la figure 4. Celle-ci montre que lorsque du palladium (voir courbes ▲, ■) est appliqué sur des cristallites nanocristallins de Mg₂Ni l'absorption à température et pression égales est beaucoup plus rapide. Ceci s'explique par une réduction des oxydes en surface des cristallites, qui freinent la dissociation de l'hydrogène et son absorption.

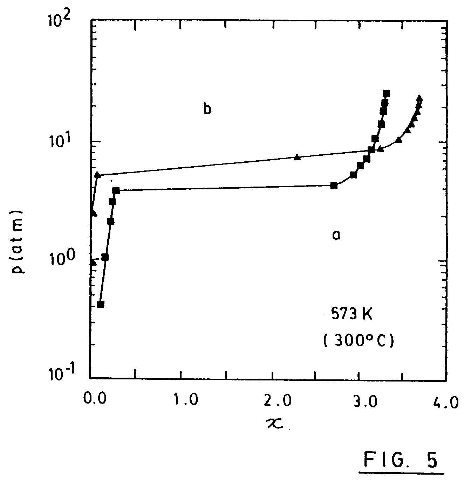

Dans ce qui précède, on a parlé exclusivement d'alliages "simples". L'invention couvre toutefois aussi les alliages intermétalliques (i..e ceux précédemment décrits) dont les cristallites incluent en outre un ou plusieurs autres métaux dont la présence n'affecte pas la structure cristalline. Ces autres métaux peuvent être choisis dans le groupe constitué par Al, Co, Fe, La, Zn, Pd et, de préférence, Cu. Un tel ajout d'un autre métal est intéressant puisque, d'une part, il peut s'effectuer en utilisant le même procédé de préparation (i.e. en ajoutant une quantité adéquate de poudre de l'autre métal choisi, aux poudres de l'alliage de base). En outre, un tel ajout est intéressant dans la mesure où il permet de modifier (et donc d'ajuster à volonté) les caractéristiques d'absorption d'un alliage donné. À ce sujet, on peut se référer à la figure 5, qui montre une modification de la position du plateau des isothermes "pression/concentration d'hydrogène absorbé" dans le cas d'un alliage nanocristallin Mg₂Ni (■) et d'un alliage nanocristallin Mg₂Ni_{0.75}Cu_{0.25}.

Pour démontrer l'efficacité des alliages nanocristallins selon l'invention pour le stockage de l'hydrogène, plusieurs essais ont été effectués. Au cours de ces essais, la cinétique d'absorption et la quantité d'hydrogène absorbée par de la poudre de Mg₂Ni nanocristalline ont été déterminées en utilisant un appareil volumétrique automatisé contrôlé par un ordinateur. La poudre était placée dans une chambre de réaction en acier inoxydable reliée à un système d'alimentation en gaz et à des capteurs de pression. La quantité d'hydrogène absorbée a correspondu au changement de pression entre la chambre de réaction et un réservoir à pression fixe.

### EXEMPLE 1

Une poudre nanocristalline de Mg₂Ni fabriquée par broyage tel que précédemment décrit a été purgée et chauffée à 300°C, ce qui est une température d'hydrogénation adéquate. De l'hydrogène gazeux a alors été introduit dans la chambre sous une pression de 12 bars. Pour le premier cycle, la poudre a été hydrogénée pendant 40 min., puis plusieurs fois pendant 5 min. pour les cycles subséquents. La quantité d'hydrogène absorbée s'est avérée être égale à 3,35% en poids, ce qui est de l'ordre de grandeur de la quantité d'hydrogène normalement absorbée par les alliages Mg₂Ni polycristallins classiques. Toutefois, dans le cas particulier de l'alliage nanocristallin, il n'a pas été nécessaire de procéder à une activation avant de procéder à l'hydrogénation. En outre, l'absorption s'est effectuée de façon beaucoup plus rapide. La déshydrogénation a été effectuée à la même température de 300°C sous une pression d'hydrogène de 1 bar pendant 10 min.

### EXEMPLE 2

Une poudre de Mg₂Ni nanocristalline fabriquée par broyage a été purgée et chauffée à une température d'hydrogénation de 200°C. De l'hydrogène a alors été admis sous une pression de 15 bars et l'hydrogénation a été effectuée pendant 60 min. La quantité d'hydrogène absorbée s'est avérée égale à 2,55% en poids.

### EXEMPLE 3

Une poudre de Mg₂Ni nanocristalline fabriquée par broyage suivi d'un broyage additionnel effectué avec de la poudre de palladium a été purgée de façon continue et chauffée à une température d'hydrogénation de 200°C. De l'hydrogène a alors été introduit sous une pression de 15 bars et la poudre a été hydrogénée pendant 10 min. à 200°C. La quantité d'hydrogène absorbée par la poudre à 200°C sans aucune préactivation s'est avérée de l'ordre de 2,4% en poids, ce qui représente environ 68% du montant stoechiométrique dans la mesure où la formule chimique de l'hydrure est présumée être Mg₂NiH₄. À des températures supérieures ou égales à 300°C, ce pourcentage peut être augmenté jusqu'à 72%. Pour la désorption, l'hydrogène a été extrait sous une pression de 0.3 bar pendant 1 heure.

### EXEMPLE 4

Un alliage de Mg₂Ni nanocristallin fabriqué par broyage tel que précédemment décrit et dont la surface avait été modifiée avec de la poudre de palladium a été purgé pendant 5 à 15 min. à la température de la pièce. De l'hydrogène a alors été introduit sous une pression de 12 bars et la poudre a été hydrogénée pendant 17 min. à température ambiante. La quantité d'hydrogène absorbée était égale à 2% en poids. Pour la déshydrogénation qui prit environ 1 heure, la poudre a été chauffée jusqu'à 200°C et la pression d'hydrogène a été réduite à 0,3 bar.

## Revendications

1. Une poudre de formule Mg₂₋ₓNi₁₊ₓ (x étant compris entre -0,3 et +0,3), caractérisée en ce qu'elle se présente sous la forme de cristallites de taille inférieure à 100 nm.

2. La poudre de formule Mg₂₋ₓNi₁₊ₓ selon la revendication 1, caractérisée en ce que la taille des cristallites est inférieure à 30 nm.

3. La poudre de formule Mg₂₋ₓNi₁₊ₓ selon la revendication 1 ou 2, caractérisée en ce qu'elle est obtenue par broyage d'un alliage de formule Mg₂Niₓ.

4. La poudre de formule Mg₂₋ₓNi₁₊ₓ selon la revendication 1 ou 2, caractérisée en ce qu'elle est obtenue en broyant sous atmosphère inerte un mélange de poudre de Mg et de poudre de Ni en proportions adéquates pour obtenir l'alliage requis, ledit broyage permettant à la fois la préparation par voie mécanique de cristallites de Mg₂Niₓ à partir des poudres de Mg et de Ni, et la réduction de la taille de ces cristallites à la valeur voulue.

5. La poudre de formule Mg₂₋ₓNi₁₊ₓ selon la revendication 3, caractérisée en ce que les cristallites incluent également un ou plusieurs autres métaux dont la présence n'affecte pas la structure cristalline des cristallites.

6. La poudre de formule Mg₂₋ₓNi₁₊ₓ selon la revendication 4, caractérisée en ce que les cristallites incluent également un ou plusieurs autres métaux dont la présence n'affecte pas la structure cristalline des cristallites.

7. La poudre de formule Mg₂₋ₓNi₁₊ₓ selon la revendication 5 ou 6 caractérisée en ce que les autres métaux sont choisis dans le groupe constitué par Cu, Al, Co, La, Pd, Zn et Fe.

8. La poudre de formule Mg₂₋ₓNi₁₊ₓ selon la revendication 7, caractérisée en ce que ledit autre métal est Cu.

9. La poudre de formule Mg₂₋ₓNi₁₊ₓ selon l'une quelconque des revendications 1, 2, 5, 6 ou 8 caractérisée en ce que les cristallites sont recouvertes de noyaux d'un matériau catalyseur de dissociation de la molécule d'hydrogène.

10. La poudre de formule Mg₂₋ₓNi₁₊ₓ selon la revendication 9, caractérisée en ce que ledit matériau catalyseur est choisi dans le groupe constitué par Pd, Pt, Ir et Rh.

11. La poudre de formule Mg₂₋ₓNi₁₊ₓ selon la revendication 10, caractérisée en ce que ledit matériau catalyseur est Pd.

12. La poudre de formule Mg₂₋ₓNi₁₊ₓ selon la revendication 4, caractérisée en ce que les cristallites sont recouvertes de noyaux d'un matériau catalyseur de dissociation de la molécule d'hydrogène.

13. La poudre de formule Mg₂₋ₓNi₁₊ₓ selon la revendication 12, caractérisée en ce que ledit matériau catalyseur est choisi dans le groupe constitué par Pd, Pt, Ir et Rh.

14. La poudre de formule Mg₂₋ₓNi₁₊ₓ selon la revendication 13, caractérisée en ce que ledit matériau catalyseur est Pd.

15. Usage de la poudre de formule Mg₂₋ₓNi₁₊ₓ selon l'une quelconque des revendications 1, 2, 5, 6, 8 et 10 à 14, pour stocker, transporter ou stocker et transporter de l'hydrogène.

16. Usage de la poudre de formule Mg₂₋ₓNi₁₊ₓ selon la revendication 3, pour stocker, transporter ou stocker et transporter.

17. Usage de la poudre de formule Mg₂₋ₓNi₁₊ₓ selon la revendication 4, pour stocker, transporter ou stocker et transporter.

18. Une poudre d'un alliage de Ni avec un autre métal choisi dans le groupe constitué par Mg, La, Be et Li, caractérisée en ce qu'elle se présente sous la forme de cristallites de taille inférieure à 100 nm et dont la structure cristalline permet une absorption d'hydrogène.

19. La poudre d'alliage de Ni selon la revendication 18, caractérisée en ce que l'autre métal est La et en ce que ladite poudre est constituée de cristallites de LaNi₅ de taille inférieure à 100 nm.

20. La poudre d'alliage de Ni selon la revendication 18, caractérisée en ce que l'autre métal est Be.

21. La poudre d'alliage de Ni selon la revendication 18, caractérisée en ce que l'autre métal est Li.

22. La poudre d'alliage de Ni selon l'une quelconque des revendications 18 à 21, caractérisée en ce qu'elle est obtenue en broyant sous atmosphère inerte un mélange de poudre de Ni avec de la poudre de l'autre métal en proportions adéquates pour obtenir l'alliage requis, ledit broyage permettant à la fois la préparation par voie mécanique de cristallites dudit alliage à partir des poudres de Ni et l'autre métal, et la réduction de la taille de ces cristallites à la valeur voulue.

23. Usage de la poudre d'alliage de Ni selon l'une quelconque des revendications 18 à 21 pour stocker, transporter ou stocker et transporter de l'hydrogène.

24. Usage de la poudre d'alliage de Ni selon la revendication 22, pour stocker, transporter ou stocker et transporter de l'hydrogène.

25. Procédé de préparation d'une poudre constituée de cristallites d'un alliage de Ni avec un autre métal choisi dans le groupe constitué par Be, Li, Mg et La, lesdites cristallites ayant une taille inférieure à 100 nm et une structure cristalline permettant l'absorption d'hydrogène, caractérisé en ce que l'on broie mécaniquement sous atmosphère inerte un mélange de poudre de Ni et de poudre de l'autre métal en proportions adéquates pour obtenir l'alliage requis, ledit broyage permettant à la fois la préparation par voie mécanique de cristallites de l'alliage voulu à partir des poudres de Ni et de l'autre métal, et la réduction de la taille de ces cristallites à la valeur voulue.

26. Procédé selon la revendication 25, caractérisé en ce que l'on utilise des poudres de Ni et Mg en proportions choisies pour produire des cristallites de Mg₂Ni.

27. Procédé selon la revendication 25, caractérisé en ce que l'on utilise des poudres de Ni et La en proportions choisies pour produire des cristallites de LaNi₅.

28. Procédé selon l'une quelconque des revendications 25 à 27, caractérisé en ce que l'on ajoute au moins un autre métal dont la présence n'affecte pas la structure cristalline de l'alliage intermétallique obtenu.

29. Procédé selon la revendication 28, caractérisé en ce que l'autre métal est Cu.

30. Procédé selon l'une quelconque des revendications 25 à 27 et 27, caractérisée en ce qu'une fois le broyage effectué et les cristallites obtenues, on ajoute à ceux-ci une poudre d'un matériau catalyseur de dissociation de la molécule d'hydrogène et l'on procède à un broyage additionnel plus court de façon à appliquer sur lesdits cristallites des noyaux dudit matériau catalyseur sous la forme d'une couche mince.

31. Procédé selon la revendication 30, caractérisé en ce que ledit matériau catalyseur est choisi dans le group constitué par Pd, Pt, Ir et Rh.

32. Procédé selon la revendication 31, caractérisé en ce que ledit matériau catalyseur est Pd.

## Claims

1. A nanocrystalline powder of formula Mg₂₋ₓNi₁₊ₓ, (x ranging between -0.3 and +0.3), characterized in that it is in the form of crystallites having a grain size lower than 100 nm.

2. The powder of formula Mg₂₋ₓNi₁₊ₓ according to claim 1, characterized in that the grain size of the crystallites is lower than 30 nm.

3. The powder of formula Mg₂₋ₓNi₁₊ₓ according to claim 1 or 2, characterized in that it is obtained by grinding an alloy of formula Mg₂₋ₓNi₁₊ₓ.

4. The powder of formula Mg₂₋ₓNi₁₊ₓ according to claim 1 or 2, characterized in that it is obtained by grinding under an inert atmosphere a Mg powder with a Ni powder in such amounts so as to obtain the requested alloy, said grinding allowing simultaneously the preparation in a mechanical way of said crystallites of Mg₂₋ₓNi₁₊ₓ from said Mg and Ni powders, and the reduction of the grain size of said crystallites to the requested value.

5. The powder of formula Mg₂₋ₓNi₁₊ₓ according to claim 3, characterized in that the crystallites also includes at least one additional metal which does not modify the crystalline structure of said crystallites.

6. The powder of formula Mg₂₋ₓNi₁₊ₓ according to claim 4, characterized in that the crystallites also includes at least one additional metal which does not modify the crystalline structure of said crystallites.

7. The powder of formula Mg₂₋ₓNi₁₊ₓ according to claim 5 or 6, characterized in that at least one additional metal is selected from the group consisting of Cu, Al, Co, La, Pd, Zn and Fe.

8. The powder of formula Mg₂₋ₓNi₁₊ₓ according to claim 7, characterized in that at least one additional metal is Cu.

9. The powder of formula Mg₂₋ₓNi₁₊ₓ according to any one of claims 1, 2, 5, 6 or 8, the crystallites are covered with clusters of a hydrogen dissociation catalyst material.

10. The powder of formula Mg₂₋ₓNi₁₊ₓ according to claim 9, characterized in that the catalyst material is selected from the group consisting of Pd, Pt, Ir and Rh.

11. The powder of formula Mg₂₋ₓNi₁₊ₓ according to claim 10, characterized in that the catalyst material is Pd.

12. The powder of formula Mg₂₋ₓNi₁₊ₓ according to claim 4, characterized in that the crystallites are covered with clusters of a hydrogen dissociation catalyst material.

13. The powder of formula Mg₂₋ₓNi₁₊ₓ according to claim 12, characterized in that the catalyst material is selected from the group consisting of Pd, Pt, Ir and Rh.

14. The powder of formula Mg₂₋ₓNi₁₊ₓ according to claim 13, characterized in that the catalyst material is Pd.

15. Use of the powder of formula Mg₂₋ₓNi₁₊ₓ according to any one of claims 1, 2, 5, 6, 8 and 10 to 14, for storing, transporting or storing and transporting.

16. Use of the powder of formula Mg₂₋ₓNi₁₊ₓ according to claim 3, for storing transporting or storing and transporting.

17. Use of the powder of formula Mg₂₋ₓNi₁₊ₓ according to claim 4, for storing transporting or storing and transporting.

18. A nanocrystalline powder of an alloy of Ni with another metal selected from the group consisting of Mg, La, Be and Li, characterized in that it is in the form of crystalline particles having a grain size lower than 100 nm and a crystalline structure allowing hydrogen absorption.

19. The powder of an alloy of Ni according to claim 18, characterized in that the other metal is La and said powder consists of crystalline particles of LaNi₅ having a grain size lower than 100 nm.

20. The powder of an alloy of Ni according to claim 18, characterized in that the other metal is Be.

21. The powder of an alloy of Ni according to claim 18, characterized in that the other metal is Li.

22. The powder of an alloy of Ni according to any one of claims 18 to 21, characterized in that it is obtained by grinding under an inert atmosphere a Ni powder with a powder of the other metal in such amounts so as to obtain the requested alloy, said grinding allowing simultaneously the preparation in a mechanical way of said crystallites of said alloy from the powders of Ni and of the other metal, and the reduction of grain size of said crystallites to the requested value.

23. Use of the powder of an alloy of Ni according to any one of claims 18 to 21 storing, transporting or storing and transporting hydrogen.

24. Use of the powder of an alloy of Ni according to claim 22 storing, transporting or storing and transporting hydrogen.

25. A process for preparing a nanocrystalline powder consisting of crystallites of an alloy of Ni with another metal selected from the group consisting of Be, Li, Mg and La, said crystallites having a grain size lower than 100 nm and a crystalline structure allowing hydrogen absorption, characterized in that it comprises grinding under an inert atmosphere a powder of Ni with a powder of the other metal in such amounts so as to obtain the requested alloy, said grinding allowing simultaneously the preparation in a mechanical way of crystallites of the requested alloy from the powders of Ni and of the other metal, and allowing the reduction of the grain size to the requested value.

26. The process of claim 25, characterized in that use is made of powders of Ni and Mg in selected amounts to produce crystallites of Mg₂Ni.

27. The process of claim 25, characterized in that use is made of powders of Ni and La in selected amounts to produce crystallites of LaNi₅.

28. The process according to any one of claims 25 to 27, characterized in that at least one other metal is added, which does not modify the crystalline structure of the intermetallic alloy that is obtained.

29. The process of claim 28, characterized in that the other metal is Cu.

30. The process according to any one of claims 25 to 27, characterized in that, once the grinding step is completed and the nanocrystalline powder is obtained, a given amount of a hydrogen dissociation catalyst material is added to said crystallites and the resulting mixture is subjected to an additional grinding step shorter in time than the first one so as to apply onto said crystallites clusters of said catalyst material in the form of a thin layer.

31. The process of claim 30, characterized in that said catalyst material is selected from the group consisting of Pd, Pt, Ir and Rh.

32. The process of claim 31, characterized in that said catalyst material is Pd.

## Patentansprüche

1. Pulver der Formel Mg₂₋ₓNi₁₊ₓ (wobei x zwischen -0,3 und +0,3 liegt) dadurch gekennzeichnet, daß sich das Pulver in Form von Kristalliten der Größe unterhalb von 100 nm darstellt.

2. Pulver der Formel Mg₂₋ₓNi₁₊ₓ nach Anspruch 1, dadurch gekennzeichnet, daß die Größe der Kristallite unterhalb von 30 nm liegt.

3. Pulver der Formel Mg₂₋ₓNi₁₊ₓ nach Anspruch 1 oder 2, dadurch gekennzeichnet, daß das Pulver durch Zerreiben einer Verbindung der Formel Mg₂Niₓ erhalten wird.

4. Pulver der Formel Mg₂₋ₓNi₁₊ₓ nach Anspruch 1 oder 2, dadurch gekennzeichnet, daß das Pulver durch Zerreiben in inerter Atmosphäre einer Mischung des Pulvers aus Mg und des Pulvers aus Ni in angemessenen Proportionen zum Erhalt der erforderlichen Legierung erhalten wird, wobei das Zerreiben gleichzeitig die Herstellung der Kristalliten aus Mg₂Niₓ auf mechanischem Weg, ausgehend von Pulvern von Mg und Ni, und die Verringerung der Größe der Kristallite auf den gewollten Wert ermöglicht.

5. Pulver der Formel Mg₂₋ₓNi₁₊ₓ nach Anspruch 3, dadurch gekennzeichnet, daß die Kristallite noch ein oder mehrere andere Metalle enthalten, deren Anwesenheit die kristalline Struktur der Kristallite nicht beeinträchtigt.

6. Pulver der Formel Mg₂₋ₓNi₁₊ₓ nach Anspruch 4, dadurch gekennzeichnet, daß die Kristallite noch ein oder mehrere andere Metalle enthalten, deren Anwesenheit die kristalline Struktur der Kristallite nicht beeinträchtigt.

7. Pulver der Formel Mg₂₋ₓNi₁₊ₓ nach Anspruch 5 oder 6, dadurch gekennzeichnet, daß die anderen Metalle aus der Gruppe gebildet von Cu, Al, Co, La, Pd, Zn und Fe ausgewählt sind.

8. Pulver der Formel Mg₂₋ₓNi₁₊ₓ nach Anspruch 7, dadurch gekennzeichnet, daß das andere Metall Cu ist.

9. Pulver der Formel Mg₂₋ₓNi₁₊ₓ nach einem der Ansprüche 1, 2, 5, 6, oder 8, dadurch gekennzeichnet, daß die Kristallite mit Kernen eines Katalysatormaterials für die Dissoziation von Wasserstoffmolekülen behandelt sind.

10. Pulver der Formel Mg₂₋ₓNi₁₊ₓ nach Anspruch 9, dadurch gekennzeichnet, daß das Katalysatormaterial aus der Gruppe bestehend aus Pd, Pt, Ir und Rh ausgewählt ist.

11. Pulver der Formel Mg₂₋ₓNi₁₊ₓ nach Anspruch 10, dadurch gekennzeichnet, daß das Katalysatormaterial Pd ist.

12. Pulver der Formel Mg₂₋ₓNi₁₊ₓ nach Anspruch 4, dadurch gekennzeichnet, daß die Kristallite mit Kernen eines Katalysatormaterials für die Dissoziation der Wasserstoffmoleküle behandelt sind.

13. Pulver der Formel Mg₂₋ₓNi₁₊ₓ nach Anspruch 12, dadurch gekennzeichnet, daß das Katalysatormaterial unter der Gruppe bestehend aus Pd, Pt, Ir und Rh ausgewählt ist.

14. Pulver der Formel Mg₂₋ₓNi₁₊ₓ nach Anspruch 13, dadurch gekennzeichnet, daß das Katalysatormaterial Pd ist.

15. Verwendung des Pulvers der Formel Mg₂₋ₓNi₁₊ₓ nach einem der Ansprüche 1, 2, 5, 6, 8 und 10 bis 14 zum Speichern, Transportieren oder Speichern und Transportieren von Wasserstoff.

16. Verwendung des Pulvers der Formel Mg₂₋ₓNi₁₊ₓ nach Anspruch 3 zum Speichern, Transportieren oder Speichern und Transportieren.

17. Verwendung des Pulvers der Formel Mg₂₋ₓNi₁₊ₓ nach Anspruch 4 zum Speichern, Transportieren oder Speichern und Transportieren.

18. Pulver der Legierung aus Ni mit einem anderen Metall ausgewählt aus der Gruppe bestehend aus Mg, La, Be und Li, dadurch gekennzeichnet, daß das Pulver sich in Form von Kristalliten der Größe unterhalb von 100 nm darstellt und daß die kristalline Struktur die Absorption von Wasserstoff ermöglicht.

19. Pulver der Legierung von Ni nach Anspruch 18, dadurch gekennzeichnet, daß das andere Metall La ist und daß das Pulver aus Kristalliten von LaNi₅ der Größe unterhalb von 100 nm dargestellt wird.

20. Pulver der Legierung von Ni nach Anspruch 18, dadurch gekennzeichnet, daß das andere Metall Be ist.

21. Pulver der Verbindung von Ni nach Anspruch 18, dadurch gekennzeichnet, daß das andere Metall Li ist.

22. Pulver der Verbindung von Ni nach einem der Ansprüche 18 bis 21, dadurch gekennzeichnet, daß das Pulver durch Zerreiben einer Mischung des Pulvers aus Ni mit dem Pulver des anderen Metalls in inerter Atmosphäre erhalten wird, und zwar in passenden Anteilen zum Erhalt der erforderlichen Legierung, wobei das Zerreiben gleichzeitig die Herstellung der Kristallite der Legierung auf mechanischem Weg, ausgehend von Pulvern von Nickel und des anderen Metalls, und die Verringerung der Größe der Kristallite aus den gewollten Wert ermöglicht.

23. Verwendung des Pulvers der Ni-Legierung nach einem der Ansprüche 18 bis 21 zum Speichern, Transportieren oder Speichern und Transportieren von Wasserstoff.

24. Verwendung des Pulvers der Nickellegierung nach Anspruch 22 zum Speichern, Transportieren oder Speichern und Transportieren von Wasserstoff.

25. Verfahren der Herstellung eines Pulvers, bestehend aus Kristalliten einer Legierung von Ni mit einem anderen Metall, das aus der Gruppe bestehend aus Be, Li, Mg und La ausgewählt ist, wobei die Kristallite eine Größe unterhalb von 100 nm und eine kristalline Struktur zur Ermöglichung der Absorption von Wasserstoff aufweisen, dadurch gekennzeichnet, daß eine Mischung aus Ni-Pulver und Pulver des anderen Metalls in geeigneten Anteilen zum Erhalt der erforderlichen Legierung mechanisch in inerter Atmosphäre fein zermahlen wird, wobei die feine Mahlung gleichzeitig die Herstellung der Kristallite der gewollten Legierung auf mechanischem Weg, ausgehend von Pulvern aus Ni und des anderen Metalls, und die Verringerung der Größe der Kristallite auf den gewollten Wert ermöglicht.

26. Verfahren nach Anspruch 25, dadurch gekennzeichnet, daß Pulver aus Ni und Mg in gewählten Anteilen zur Herstellung von Kristalliten aus Mg₂Ni verwendet werden.

27. Verfahren nach Anspruch 25, dadurch gekennzeichnet, daß Pulver aus Ni und La in gewählten Anteilen zur Herstellung von Kristalliten aus LaNi₅ verwendet werden.

28. Verfahren nach einem der Ansprüche 25 bis 27, dadurch gekennzeichnet, daß mindestens ein anderes Metall beigefügt wird, deren Anwesenheit nicht die kristalline Struktur der erhaltenen intermetallischen Legierung beeinträchtigt.

29. Verfahren nach Anspruch 28, dadurch gekennzeichnet, daß das andere Metall Cu ist.

30. Verfahren nach einem der Ansprüche 25 bis 27 und 27, dadurch gekennzeichnet, daß nach Ausführung der Feinzermahlung und der erhaltenen Kristalliten diesen sein Pulver aus Katalysatormaterial für die Dissoziation der Wasserstoffmoleküle zugefügt wird und daß ein zusätzlicher, kürzerer Mahlvorgang in der Weise ausgeführt wird, daß auf die Kristallite Kerne des Katalysatormaterials in Form einer dünnen Schicht aufgebracht werden.

31. Verfahren nach Anspruch 30, dadurch gekennzeichnet, daß das Katalysatormaterial aus der Gruppe gebildet von Pd, Pt, Ir und Rh ausgewählt ist.

32. Verfahren nach Anspruch 31, dadurch gekennzeichnet, daß das Katalysatormaterial Pd ist.
